# EUROPÄISCHE PATENTSCHRIFT

(11) **EP 0 548 446 B1**
(45) Veröffentlichungstag und Bekanntmachung des Hinweises auf die Patenterteilung: **04.09.1996**
(21) Anmeldenummer: 92105026.6
(22) Anmeldetag: 24.03.1992
(51) Int. Cl.: A22C 17/00

(54) **Vorrichtung zum Zerhacken von Fleischwaren**
Chopping block for meat material
Billot pour matière à base de viande

(30) Priorität: 20.12.1991 DE 9115843 U
(43) Veröffentlichungstag der Anmeldung: 30.06.1993
(73) Patentinhaber: Wörz, Klaus, D-74864 Fahrenbach (DE)
(72) Erfinder: Wörz, Klaus, D-74864 Fahrenbach (DE)
(74) Vertreter: Naumann, Ulrich, Dr.-Ing.

(56) Entgegenhaltungen:
- DE-C- 215 484
- DE-U- 1 932 133
- DE-U- 1 997 635
- DE-U- 7 800 361
- DE-U- 8 714 092
- FR-A- 1 240 675
- US-A- 1 734 853
- US-A- 2 836 213

## Beschreibung

Die Erfindung betrifft eine Vorrichtung zum Zerhacken von Fleischwaren mit einem quaderförmigen, massiven Hackblock, der von einem, vier Beine aufweisenden Gestell mit horizontaler, nach oben weisender Oberfläche als Hackfläche in Arbeitshöhe getragen wird und dessen Beine sich in Verlängerung der vertikalen Kanten des Hackblocks erstrecken, wobei das Gestell einen Rahmen aufweist, an dem die Beine befestigt sind und der freitragend als verwindungsfreie Stütze für den Hackblock ausgebildet ist, wobei der Rahmen eine nach oben offene Aufnahme bildet, in die der Hackblock formschlüssig einsenkbar ist und in seiner Funktionsstellung aufliegend und gegen seitliches Verschieben gesichert paßt und wobei der Hackblock lose in die Aufnahme eingesenkt ist und in einer zweiten Funktionsstellung formschlüssig in die Aufnahme paßt, in der die Unterseite des in erster Funktionsstellung befindlichen Hackblocks nach oben weist und die zweite Hackfläche bildet, die als Ersatz für die ggf. aufgebrauchte erste Hackfläche dient.

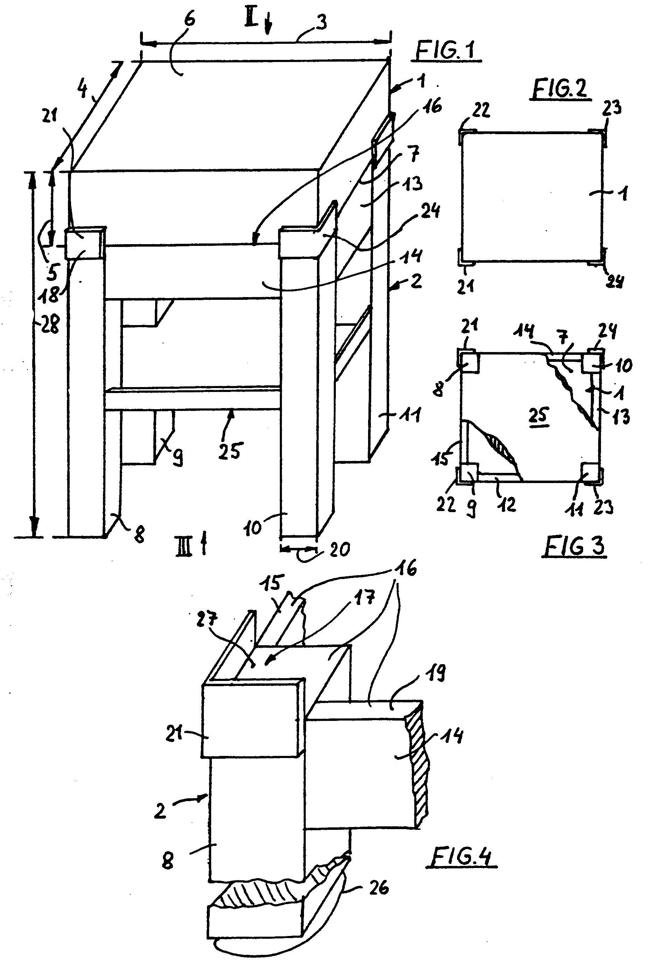

Eine gattungsbildende Vorrichtung zum Zerhacken von Fleischwaren ist aus der FR-A-1 240 675 bekannt. Bei dieser Vorrichtung ist ein Hackblock reversibel in den umlaufenden Rahmen eines Gestells mit vier Beinen einsetzbar. Wenn die oben liegende Arbeitsfläche des Hackblocks ausgenutzt ist, kann der Hackblock umgedreht werden, so daß die gegenüberliegende Fläche als Arbeitsfläche genutzt werden kann. Wie sich aus Fig. 3 und der dazugehörigen Beschreibung auf Seite 2, linke Spalte, letzter Absatz der gattungsbildenden Schrift ergibt, wird der Hackblock von dem Rahmen unter Ausbildung des oberen Teils eines Tisches eingefaßt. Die Ausbildung des Tisches erfolgt, indem sich der Hackblock auf einem an der Innenseite des Rahmens umlaufenden Steg abstützt und die Arbeitsfläche mit der Deckfläche des Rahmens bündig abschließt.

Um den Hackblock gemäß FR-A-1 240 675 mit dem Gestell lösbar zu verbinden, ist es erforderlich, daß die Kantenlängen des Rahmens zumindest geringfügig über die des Hackblocks hinausgehen. Der Verbleib eines Spalts bzw. einer Fuge zwischen dem sich von dem umlaufenden Steg nach oben erstreckenden, ebenfalls umlaufenden Rahmenbereich und den Schmalseiten des Hackblocks ist daher unvermeidlich. Wird nun die Arbeitsplatte des Hackblocks benutzt, so können sich in der Fuge Fleischreste, Blut, Fett oder gar Knochenteile ansammeln. Dadurch wird einerseits die Säuberung des Arbeitsgeräts erschwert, andererseits kann das Lösen des Hackblocks, bspw. durch verkantete Knochenteile, behindert werden.

Ein weiterer Nachteil bezüglich des Ein- und Ausbringens des Hackblocks in dem Rahmen bzw. aus dem Rahmen besteht darin, daß es für eine Person schwierig ist, den Hackblock alleine zu handhaben. Aufgrund der Ausbildung einer bündigen, abschließenden Tischfläche durch die Deckfläche des Rahmens und die Arbeitsfläche des Hackblocks besteht keine Greifmöglichkeit zum Ausbringen des Hackblocks. Umständlicherweise müßte zum Lösen des Hackblocks aus dem Rahmen auf die Arbeitsfläche oder die gegenüberliegende Fläche eine erhebliche Kraft aufgebracht werden. Erst im angehobenen, ggf. verkanteten Zustand könnte dann der Hackblock aus dem Rahmen ausgebracht werden. Beim Einbringen des Hackblocks in den Rahmen besteht obendrein eine erhebliche Verletzungsgefahr für den Handhabenden, der sich bspw. die Finger quetschen könnte.

Der Erfindung liegt daher die Aufgabe zugrunde, eine Vorrichtung der gattungsbildenden Art derart auszugestalten und weiterzubilden, daß sie einfach handhabbar ist und dabei eine problemlose Reinigung ermöglicht.

Die erfindunsgemäße Vorrichtung zum Zerhacken von Fleischwaren löst die voranstehende Aufgabe durch die Merkmale des Patentanspruches 1. Danach ist die eingangs genannte Vorrichtung derart ausgebildet, daß der Hackblock direkt auf der Deckfläche der Beine aufliegt, daß der Rahmen jeweils an den Außenseiten der Beine angeordnete Eckstege umfaßt und daß sich ausschließlich die Eckstege über das obere Ende der Beine hinaus erstrecken.

Dabei ist wesentlich, daß der Hackblock auf den Deckflächen der Beine aufliegt und diese somit kontaktiert. Die Eckstege sind den Außenseiten der Beine zugeorndet. Einzig und alleine die Eckstege ragen nach oben ab und bilden somit eine Verschiebesicherung für den Hackblock.

Erfindunsgemäß ist erkannt worden, daß eine einfache Handhabbarkeit und eine problemlose Reinigung der Vorrichtung realisierbar sind, wenn der Hackblock lediglich auf den Deckflächen der Beine aufliegt und der Rahmen nur durch Eckstege vorgegeben ist, die jeweils an den Beinen angeordnet sind und sich über das obere Ende der Außenseiten Beine hinaus erstrecken. Dadurch, daß der Rahmen nur durch Eckstege vorgegeben ist, sind die Schmalseiten des Halteblocks im wesentlichen frei zugänglich. Dies ist sowohl im Hinblick auf die hygienischen Erfordernisse im Lebensmittelbereich als auch bezüglich der Handhabbarkeit des Hackblocks beim Seitenaustausch von Vorteil. Aufgrund der Auflage des Hackblocks auf der Deckfläche der Beine wird eine auf den Hackblock wirkende Kraft direkt in das Gestell weitergeleitet, so daß die Stabilität der Vorrichtung gewährleistet ist.

Bei aufgerauhter erster Hackfläche genügt es, den Hackblock aus der Aufnahme herauszunehmen und umgekehrt wieder einzusetzen und man gewinnt noch einmal die gleiche Nutzungsdauer mit der zweiten Hackfläche. Der nur lose eingesetzte Hackblock kann auch, wenn er beidseitig aufgebraucht ist, einfach herausgenommen und gegen einen anderen neuen Hackblock ersetzt werden, wobei das alte Gestell weiterverwendet werden kann. Schließlich ist es auch möglich, bei Vorrichtungen nach der Erfindung, den aufgebrauchten Hackblock beim Herstellungsbetrieb maschinell beidseitig abzuziehen, so daß dort neue Hackflächen entstehen und der so überarbeitete Hackblock mit etwas verringerter Stärke erneut eingesetzt werden kann.

Es ist zwar bekannt, eine verarbeitete Hackfläche durch Abziehen mit einem Hobel oder dergleichen wieder herzurichten, aber das läßt sich nur einige Male durchführen. Schließlich entstehen durch die Handbearbeitung Unregelmäßigkeiten in der Hackfläche, die eine ordnungsgemäße Nutzung nicht mehr zulassen. Durch maschinelles Abziehen läßt sich dagegen auch bei stark verformter Hackfläche eine neue, ebene Hackfläche erzielen, die zu den Quaderseiten orthogonal steht und beim Einsetzen des so bearbeitenden Hackblocks in das Gestell eine neue brauchbare Hackfläche bietet, die nun wieder mehrere Male von Hand abgezogen werden kann. Der Verlust an Stärke kann durch kleine Unterlegstücke, die zwischen Hackblock und die vier Beine gelegt werden, ausgeglichen werden, wenn das möglicherweise bei abermaligem maschinellen Abziehen erforderlich sein sollte.

Bei Vorrichtungen nach der Erfindung ist ein solider Stand wünschenswert und es sollte vermieden werden, daß der Hackblock beim Arbeiten vibriert. Das läßt sich leicht in Verbindung mit der Erfindung durch eine Weiterbildung vermeiden, die dadurch gekennzeichnet ist, daß die Deckfläche eines Beines zu 100 % (Prozent) in die Kontur eines eingesetzten Hackblocks ragt und daß für jedes Bein an seinem oberen Ende außen ein sich über die Ecke erstreckender Ecksteg vorgesehen ist, der mit der Oberfläche des zugehörigen Beines eine Ausnehmung bildet, in die die betreffende Ecke des eingesetzten Hackblocks formschlüssig paßt und die einen Teil der Aufnahme bildet.

In diesem Sinne empfiehlt sich auch eine Ausgestaltung, die sich zusätzlich durch besondere konstruktive Einfachheit auszeichnet und dadurch gekennzeichnet ist, daß zwei benachbarte Beine durch eine Querstrebe verbunden sind, die sich entlang einer zugehörigen Unterkante eines eingesetzten Hackblocks unterhalb desselben erstreckt und dabei mit ihrer Oberseite an der Unterseite des Hackblocks anliegt und dadurch einen Teil der Aufnahme bildet.

Aus hygienischen Gründen empfiehlt es sich, daß der Hackblock aus Kunststoff besteht. Vorzugsweise ist es ein massiver Kunststoffblock aus hartem Kunststoff, der im Nahrungsmittelbereich zugelassen ist. Er kann aber auch, um den teuren Kunststoff einzusparen, in der Mitte einen Hohlraum aufweisen, der gegebenenfalls mit einem billigeren Material, zum Beispiel Holz, gefüllt ist.

Sehr gute Standfestigkeit erzielt man mit einem Gestell aus Holz. Vorzugsweise wird jedoch ein Gestell aus Kunststoff eingesetzt, das einstückig geformt ist.

Vorzugsweise werden die Abmessungen so gewählt, daß der Hackblock zwischen die in genormter Breite und Tiefe zur Verfügung stehenden übrigen Fleischermöbel paßt. Dementsprechend empfiehlt sich eine Stärke des Hackblocks aus Kunststoff von etwa 6 bis 30 cm und es empfehlen sich Abmessungen der Hackfläche von 30 bis 120 x 30 bis 60 cm. Für Hackblöcke aus Holz empfiehlt sich bei gleichen Abmessungen der Hackfläche eine größere Stärke von etwa 15 bis 40 cm. Das Gestell wird vorzugsweise in seiner Höhe dem zugehörigen Hackblock angepaßt, so daß die nach oben weisende Hackfläche des aufgelegten Hackblocks 60 bis 90 cm, vorzugsweise 85 bis 86 cm, hoch ist.

Für die Beine empfiehlt sich ein quadratischer Querschnitt mit einer Seitenlänge der Quadratseite von 5 bis 10 cm, vorzugsweise 8 cm.

Es empfiehlt sich weiter, im Gestell unterhalb der Aufnahme eine Ablage vorzusehen.

Der Stand und damit die Benutzung wird begünstigt, wenn, wie vorzugsweise der Fall, als Saugteller ausgebildete Füße der Beine vorgesehen sind, die vorzugsweise höhenverstellbar sind.

Die Erfindung wird nun anhand der beigefügten Zeichnungen näher erläutert. In der Zeichnung zeigt:
- Fig. 1: eine Vorrichtung nach der Erfindung, perspektivisch,
- Fig. 2: die Ansicht gemäß dem Pfeil II aus Fig. 1,
- Fig. 3: die Ansicht gemäß dem Pfeil III aus Fig. 2 und
- Fig. 4: eine Ecke des Gestells aus Fig. 1 herausgebrochen.

In der Zeichnung ist mit Bezugszeichen 1 der Hackblock und mit Bezugszeichen 2 das Gestell bezeichnet. Der Hackblock 1 ist ein quaderförmiger Kunststoffblock aus massivem Kunststoff. Die Länge 3 beträgt 60 cm, die Breite 4 beträgt 50 cm und die Stärke 5 beträgt 12 cm. Die Oberseite des Hackblocks ist die erste Hackfläche 6 und die Unterseite ist die zweite Hackfläche 7 (vgl. Fig. 3). Das Gestell 2 besteht aus vier Beinen, die paarweise mit je einer Querstrebe 12, 13, 14, 15, verbunden sind.

Das Gestell 2 bildet eine nach oben offene Aufnahme 16, in die der Hackblock 1 formschlüssig einsenkbar ist und in die er in seiner in Fig. 1 dargestellten Funktionsstellung aufliegend und gegen seitliches Verrutschen gesichert paßt. Die Höhe des Gestells 2 ist so bemessen, daß bei eingesetztem Hackblock die Hackfläche 7 gemäß Pfeil 28 eine Höhe von 86 cm hat.

Der Hackblock paßt nicht nur in der in Fig. 1 gezeichneten Funktionsstellung mit der Hackfläche 6 nach oben weisend in diese Aufnahme 16, sondern auch in einer nicht dargestellten zweiten Funktionsstellung in der die Hackfläche 7 nach oben weist. Jedes der Beine 8 bis 11 weist an seinem oberen Ende wie in Fig. 4 für das Bein 8 gezeichnet, eine Ausnehmung 17 auf, in die zugehörige Ecke 18 des eingesetzten Hackblocks 1 formschlüssig paßt. Die Ausnehmung 17 bildet einen Teil der Aufnahme 16. Die Ausnehmung 17 wird gebildet durch die gesamte Oberfläche 27 des zugehörigen Beines 8 und einen außen an das Bein angesetzten, über Eck gehenden Ecksteg 21, der die Oberfläche 27 überragt. Entsprechende Eckstege 22, 23, 24 sind auch für die anderen Ecken vorgesehen.

Die Querstreben 12 bis 15 erstrecken sich entlang je einer zugehörigen Unterkante des eingesetzten Hackblocks, zum Beispiel die Querstrebe 14 entlang der Unterkante 19, und zwar unterhalb des Hackblocks, so daß die Oberseite der Querstrebe an der Unterseite des Hackblocks - das ist in Fig. 1 die Hackfläche 7 - anliegt und einen Teil der Aufnahme 16 bildet.

Das Gestell 2 besteht aus Kunststoff und ist einstückig aus Kunststoff geformt. Die Beine haben einen quadratischen Querschnitt, mit einer Seitenlänge des Quadrates, gemäß Pfeil 20, von 8 cm.

Unterhalb der Aufnahme 16 ist am Gestell eine Ablage 25 vorgesehen. Diese Ablage 25 dient gleichzeitig zur Stabilisierung des Gestells, kann aber auch in Fortfall geraten.

Für das Bein 8 ist in Fig. 4 ein als Saugteller ausgebildeter Fuß 26 eingezeichnet. In Fig. 3 ist dieser Saugteller gestrichelt eingezeichnet. Ein solcher Saugteller ist zwar nicht erforderlich, kann aber für alle vier Beine vorgesehen sein und begünstigt die Standfestigkeit. Vorzugsweise sind die Saugteller höhenverstellbar an die Beine angeschraubt.

Weiere Ausführungsbeispiele, die sich gegenüber dem beschriebenen nur durch die Abmessungen und die verwendeten Materialien unterscheiden sind insoweit ausgestaltet, wie sich aus nachfolgender Tabelle ergibt:

**Tabelle I**

| | Beispiel 1* | Beispiel 2 | Beispiel 3 |
|---|---|---|---|
| Länge 3 | 60** | 60 | 60 |
| Breite 4 | 50 | 25 | 30 |
| Stärke 5 | 12 | 10 | 30 |
| Seitenlänge 20 | 8 | 8 | 8 |
| Gesamthöhe 28 | 86 | 86 | 86 |
| Material Gestell 2 | Kunststoff*** | Kunststoff | Holz**** |

| | | | |
|---|---|---|---|
| * Beispiel 1 entspricht Fig. 1 bis 4 und dem vorausgehenden Text | | | |
| ** Alle Längenangaben in Zentimeter | | | |
| *** Bei dem verwendeten Kunststoff handelt es sich vorzugsweise um einen gießfähigen, hartmassiv aushärtfähigen, im Zusammenhang mit der Nahrungsmittelbearbeitung zugelassenen Kunststoff, wie Polyäthylen. | | | |
| **** Bei dem verwendeten Holz handelt es sich um Weißbuche, Eiche, Teak oder anderes Hartholz, vorzugsweise veredelt. | | | |

Bevorzugte Abmessungen der Hackfläche ergeben sich aus der nachfolgenden Tabelle II.

**Tabelle II**

| | | | | |
|---|---|---|---|---|
| 30 x 30**; | 40 x 30; | 40 x 40; | | |
| 50 x 30; | 50 x 40; | 50 x 50; | | |
| 60 x 30; | 60 x 40; | 60 x 50; | 60 x 60; | |
| 70 x 40; | 70 x 50; | 70 x 60; | 70 x 70; | |
| 80 x 40; | 80 x 50; | 80 x 60; | 80 x 70; | 80 x 80; |
| 90 x 50; | 90 x 60; | 90 x 70; | 90 x 80; | |
| 100 x 50; | 100 x 60; | 120 x 60. | | |

## Patentansprüche

1. Vorrichtung zum Zerhacken von Fleischwaren mit einem quaderförmigen, massiven Hackblock (1), der von einem, vier Beine (8 bis 11) aufweisenden Gestell (2) mit horizontaler, nach oben weisender Oberfläche als Hackfläche (6) in Arbeitshöhe getragen wird und dessen Beine (8 bis 11) sich in Verlängerung der vertikalen Kanten des Hackblocks (1) erstrecken, wobei das Gestell (2) einen Rahmen aufweist, an dem die Beine (8 bis 11) befestigt sind und der freitragend als verwindungsfreie Stütze für den Hackblock (1) ausgebildet ist, wobei der Rahmen eine nach oben offene Aufnahme (16) bildet, in die der Hackblock (1) formschlüssig einsenkbar ist und in seiner Funktionsstellung aufliegend und gegen seitliches Verschieben gesichert paßt und wobei der Hackblock (1) lose in die Aufnahme (16) eingesenkt ist und in einer zweiten Funktionsstellung formschlüssig in die Aufnahme (16) paßt, in der die Unterseite des in erster Funktionsstellung befindlichen Hackblocks (1) nach oben weist und die zweite Hackfläche (7) bildet, die als Ersatz für die ggf. aufgebrauchte erste Hackfläche (6) dient,
**dadurch gekennzeichnet**, daß der Hackblock (1) direkt auf der Deckfläche (27) der Beine (8 bis 11) aufliegt, daß der Rahmen jeweils an den Außenseiten der Beine (8 bis 11) angeordnete Eckstege (21 bis 24) umfaßt und daß sich ausschließlich die Eckstege (21 bis 24) über das obere Ende der Beine (8 bis 11) hinaus erstrecken.

2. Vorrichtung nach Anspruch 1, dadurch gekennzeichnet, daß die Deckfläche (27) der Beine (8 bis 11) von einem eingesetzten Hackblock (1) vollständig (zu 100%) überdeckt ist, daß die Eckstege (21 bis 24) jeweils an dem oberen Ende eines Beins (8 bis 11) angeordnet sind und daß durch die Eckstege (21 bis 24) und die Deckfläche (27) der Beine (8 bis 11) eine einen Teil der Aufnahme (16) bildende Ausnehmung (17) ausgebildet ist, in die die betreffende Ecke des eingesetzten Hackblocks (1) formschlüssig paßt.

3. Vorrichtung nach Anspruch 1 oder 2, dadurch gekennzeichnet, daß zwei benachbarte Beine (8 bis 11) durch eine Querstrebe (13 bis 16) verbunden sind, daß der Hackblock (1) auf der nach oben weisenden Seitenfläche (19) der Querstrebe (13 bis 16) aufliegt und die Querstrebe (13 bis 16) dadurch einen Teil der Aufnahme (16) bildet.

4. Vorrichtung nach einem der Ansprüche 1 bis 3, dadurch gekennzeichnet, daß der Hackblock (1) aus Kunststoff oder Hartholz besteht.

5. Vorrichtung nach einem der Ansprüche 1 bis 4, dadurch gekennzeichnet, daß das Gestell (2) aus Kunststoff oder Hartholz besteht und einstückig geformt ist.

6. Vorrichtung nach einem der Ansprüche 1 bis 5, dadurch gekennzeichnet, daß der Hackblock (1) 6 bis 30 cm (Zentimeter) stark ist.

7. Vorrichtung nach einem der Ansprüche 1 bis 6, dadurch gekennzeichnet, daß die Hackfläche (6, 7) des Hackblocks (1) 30 bis 120 X 30 bis 60 cm groß ist.

8. Vorrichtung nach einem der Ansprüche 1 bis 7, dadurch gekennzeichnet, daß die Beine (8 bis 11) einen quadratischen Querschnitt mit einer Seitenlänge des Quadrates von 5 bis 10 cm, vorzugsweise 8 cm aufweisen.

9. Vorrichtung nach einem der Ansprüche 1 bis 8, dadurch gekennzeichnet, daß im Gestell (2) unterhalb der Aufnahme (16) eine Ablage (25) vorgesehen ist.

10. Vorrichtung nach einem der Ansprüche 1 bis 9, dadurch gekennzeichnet, daß als Saugteller (26) ausgebildete Füße der Beine (8 bis 11) vorgesehen sind, die vorzugsweise höhenverstellbar sind.

## Claims

1. Device for chopping meat products comprising a square-like, solid chopping block (1) held at working height by a support (2) having four legs (8 - 11) and a horizontal chopping surface (6) which is open toward the top, said legs (8 - 11) extending as elongations of the vertical edges of the chopping block (1), wherein said support (2) has a frame to which said legs (8 - 11) are mounted and serves as a self-contained, twist-free support for the chopping block (1), wherein the support defines an open-top fitting (16) into which the chopping block (1) can be form-fittingly inserted, and in which said block rests during operation while being secured against lateral movement, and wherein the chopping block (1) is loosely inserted into the open-top fitting (16) and, in a second operating position, form-fittingly fits into said fitting (16) and where the lower side of the block, in a first operating position, faces upwardly thus serving as a replacement chopping surface (7), if the need arises, for the first used-up chopping surface (6),
**characterized in that** the chopping block (1) rests directly on the covering surface (27) of the legs (8 - 11), and in that the frame comprises corner pieces (21 - 24) provided at the respective outer sides of the legs (8 - 11), and in that only said corner pieces (21 - 24) extend beyond the upper ends of the legs (8 - 11).

2. Device according to claim 1, characterized in that once inserted, the chopping block (1) completely (100%) covers covering surface (27) of the legs (8 - 11), in that the corner pieces (21 - 24) are disposed at the upper ends of the respective legs (8 - 11), and in that the corner pieces (21 - 24) and the covering surface (27) of the legs (8-11) define a recess (17) which is part of the fitting (16) and which the respective corner of an inserted chopping block (1) form-fittingly engages.

3. Device according to claim 1 or 2, characterized in that two adjacent legs (8 - 11) are linked by means of a cross-bar (13-16), in that the chopping block (1) rests on the upwardly facing lateral surface (19) of a cross-bar (13-16) with the cross-bar (13-16) thus forming a part of fitting (16).

4. Device according to one of the claims 1-3, characterized in that the chopping block (1) is made of plastic or hardwood.

5. Device according to one of the claims 1-4, characterized in that the support (2) is one single piece which is made plastic or hardwood.

6. Device according to one of the claims 1-5, characterized in that the chopping block (1) has a thickness of 6 to 30 cm (centimeters).

7. Device according to one of the claims 1-6, characterized in that the chopping surface (6, 7) of chopping block (1) is 30 to 120 x 30 to 60 cm in size.

8. Device according to one of the claims 1-7, characterized in that the legs (8-11) have a square cross-section with a side length of 5 to 10 cm, preferably 8 cm.

9. Device according to one of the claims 1-8, characterized in that in the support (2) underneath the fitting (16), provision is made for a tray (25).

10. Device according to one of the claims 1-9, characterized in that the legs (8-11) are provided with suction ends (26), preferably adjustable in height.

## Revendications

1. Dispositif pour couper la viande comportant un billot massif de forme parallélépipédique (1), qui est porté par un bâti (2) présentant quatre pieds (8 à 11) et qui présente à la hauteur de travail une face supérieure horizontale (6) servant de surface à couper, bâti dont les pieds (8 à 11) sont disposés dans le prolongement des arêtes verticales du billot (1), le bâti (2) présentant un cadre auquel sont fixés les pieds (8 à 11) et qui a la forme d'un support auto-portant à l'abri de la torsion pour le billot (1), le cadre constituant un logement (16) ouvert vers le dessus, dans lequel peut être encastré le billot (1) avec similarité de forme, billot (1) qui dans sa position de travail est appliqué sur le cadre et est à l'abri d'un déplacement latéral, le billot ((1) étant encastré librement dans le logement (16) et s'adaptant, dans une deuxième position de travail, avec similarité de forme dans le logement (16), deuxième position de travail où la face inférieure du billot (1) est orientée vers le haut et constitue la deuxième surface de coupe (7), servant de substitution pour la première surface de coupe (6) éventuellement usée,
caractérisé par le fait que le billot (1) est posé directement sur la face supérieure (27) des pieds (8 à 11), que le cadre présente des cornières (21 à 24) disposés sur les faces extérieures des pieds (8 à 11) et que seules les cornières (21 à 24) dépassent en hauteur l'extrémité supérieure des pieds (8 à 11).

2. Dispositif suivant la revendication 1, caractérisé en ce que la face supérieure (27) des pieds (8 à 11) est entièrement (à 100%) recouverte par le billot (1) mis en place, en ce que les cornières (21 à 24) sont chacune disposées à l'extrémité supérieure d'un pied (8 à 11) et en ce que les cornières (21 à 24) et la face supérieure (27) des pieds (8 à 11) constituent une partie de l'évidement (17) formant le logement (16), évidement (17) dans lequel s'ajuste l'angle correspondant du billot (1) mis en place.

3. Dispositif suivant la revendication 1 ou la revendication 2, caractérisé en ce que deux pieds voisins (8 à 11) sont reliés par une traverse (13 à 16), en ce que le billot (1) est posé sur la face latérale orientée vers le haut (19) de la traverse (13 à 16) et en ce que la traverse (13 à 16) constitue de ce fait une partie du logement (16).

4. Dispositif suivant l'une quelconque des revendications de 1 à 3, caractérisé en ce que le billot (1) est constitué par une matière plastique ou du bois dur.

5. Dispositif suivant l'une quelconque des revendications de 1 à 4, caractérisé en ce que le billot (1) a une épaisseur de 6 cm à 30 cm.

6. Dispositif suivant l'une quelconque des revendications de 1 à 5, caractérisé en ce que le bilot (1) a une épaisseur de 6 à 30 cm (centimètre).

7. Dispositif suivant l'une quelconque des revendications de 1 à 6, caractérisé en ce que la surface de coupe (6, 7) du billot (1) a des dimensions de 30 à 120 x 30 à 60 cm.

8. Dispositif suivant l'une quelconque des revendications de 1 à 7, caractérisé en ce que les pieds (8 à 11) ont une section transversale de forme carrée avec une longueur de côté de 5 à 10 cm, de préférence de 8 cm.

9. Dispositif suivant l'une quelconque des revendications de 1 à 8, caractérisé en ce que dans le bâti (2) est prévue une surface de pose (25) située au-dessous du logement (16)

10. Dispositif suivant l'une quelconque des revendications de 1 à 9, caractérisé les extrémités inférieures des pieds (8 à 11) présentent des ventouses (26), de préférence réglables en hauteur.
